# EUROPEAN PATENT SPECIFICATION

(11) **EP 3 658 364 B1**
(45) Date of publication and mention of the grant of the patent: **25.11.2020**
(21) Application number: 18770073.7
(22) Date of filing: 27.07.2018
(51) Int. Cl.: B29D 30/16, B29D 30/30

(54) **A METHOD AND SYSTEM FOR THE AUTOMATIC FEEDING OF A STRIP OF ELASTOMERIC MATERIAL TO A USER UNIT**
VERFAHREN UND SYSTEM ZUR AUTOMATISCHEN ZUFÜHRUNG EINES STREIFENS AUS ELASTOMEREM MATERIAL ZU EINER BENUTZEREINHEIT
PROCÉDÉ ET UN SYSTÈME POUR L'ALIMENTATION AUTOMATIQUE D'UN RUBAN DE MATERIAU ÉLASTOMÈRE À UNE UNITÉ D'UTILISATEUR

(30) Priority: 28.07.2017 EP 17183894
(43) Date of publication of application: 03.06.2020
(73) Proprietor: Marangoni Meccanica S.P.A., 38068 Rovereto (IT)
(72) Inventor: LENTI, Massimo, 38068 Rovereto (TN) (IT); DALL'AGNOL, Alex, 38068 Rovereto (TN) (IT); COSTANTINI, Davide, 38068 Rovereto (TN) (IT)
(74) Representative: Giannini, Manuela
(86) International application number: PCT/IB2018/055641
(87) International publication number: WO 2019/021255

(56) References cited:
- EP-A1- 0 943 421
- WO-A2-2015/087289
- GB-A- 1 253 295

## Description

### Cross-Reference to Related Patent Applications

This patent application claims the priority of European patent application No. 17183894.9 filed on 28.07.2017

### Technical Field of the Invention

The present invention relates to a method and system for the automatic feeding of a strip of elastomeric material to a user unit, preferably, though not necessarily, for the rubberizing of an annular surface of a toroidal body forming part of a tire, to which the following description makes specific reference without excluding general reference.

### State of the Art

In the rubber industry, it is known to manufacture a component of a tire by progressively depositing a strip of raw clastomcric material, with given cross section, onto a rotating toroidal support, for example a rigid core or a toroidal body of a tire to be finished or reconstructed.

To this end, the toroidal body to be rubberized is rotatably mounted onto a spindle to rotate about an axis thereof under the thrust of a motor, and defines, with the spindle, a user unit for the strip.

In general, in known systems of the type described above, the strip is fed to the user unit by means of a feeding unit, which comprises an extruder for the production of a continuous strip, normally having a circular section, made of elastomeric material; an applicator roller arranged tangentially to the annular surface to be rubberized; and a feeding line adapted to feed the elastomeric material from the extruder to the applicator roller.

In known systems, the feeding line generally comprises a calender for the transformation of the continuous strip produced by the extruder into the strip of given cross section, and a plurality of transfer members for conveying the strip to the applicator roller.

The transfer members normally comprise one or more dancer units, having the function to compensate for any differences in the advancing speed of the strip along the feeding line, so as to give the strip a substantially constant average advancing speed.

In general, in a known system of the type described above, the problem exists of managing the strip, both in an initial step of the feeding process of the strip, wherein it is necessary to feed an head portion of the strip onto the feeding line, and in a final step of the feeding process of the strip, wherein, once the strip has been cut to a predetermined length, it is necessary to guide an tail portion of the strip along the feeding line, to the applicator roller, preventing the shape and the size of the strip from changing .

Various solutions have been proposed to overcome this problem, particularly the problem related to the automatic feeding of the head portion of the strip at the start of the process, one of which is offered, for example, by EP 1 945 549 B1, in the name of the Applicant. Patent document EP 0 943 421 A1 discloses an automatic strip feeding method according to the preamble of claim 1.

Nonetheless, despite being improved, these solutions do not allow the above-described problem to be overcome in a completely satisfactory manner.

### Subject-matter and Summary of the Invention

It is an object of the present invention to provide a method and system for automatically feeding a strip of an elastomeric material to a user unit, which method and system being able to overcome the previously described problem in an alternative and improved manner to the known solutions.

According to the present invention, a method and a system for automatically feeding a strip of elastomeric material to a user unit are provided, as claimed in the appended claims.

### Brief Description of the Drawings

Figure 1 shows a schematic view of a preferred embodiment of the automatic feeding system of a strip of elastomeric material to a user unit according to the present invention.
Figure 2 shows a perspective view, with parts removed for clarity, of a detail of the system in Figure 1.
Figure 3 shows a lateral view of the detail in Figure 2.
Figures from 4 to 12 show respective steps of the process of automatically feeding a strip of elastomeric material, according to the present invention, as implemented by the system in Figure 1.

### Detailed Description of Preferred Embodiments of the Invention

The present invention will now be described in detail with reference to the attached Figures to allow a skilled person to make and use it. Various modifications to the described embodiments will be immediately clear to a person skilled in the art and the general described principles can be applied to other embodiments and applications without going beyond the protective scope of the present invention, as defined in the appended claims. Therefore, the present invention shall not be considered limited to the described and illustrated embodiments, but it must be granted the widest protective scope, in accordance with the principles and features described and claimed herein.

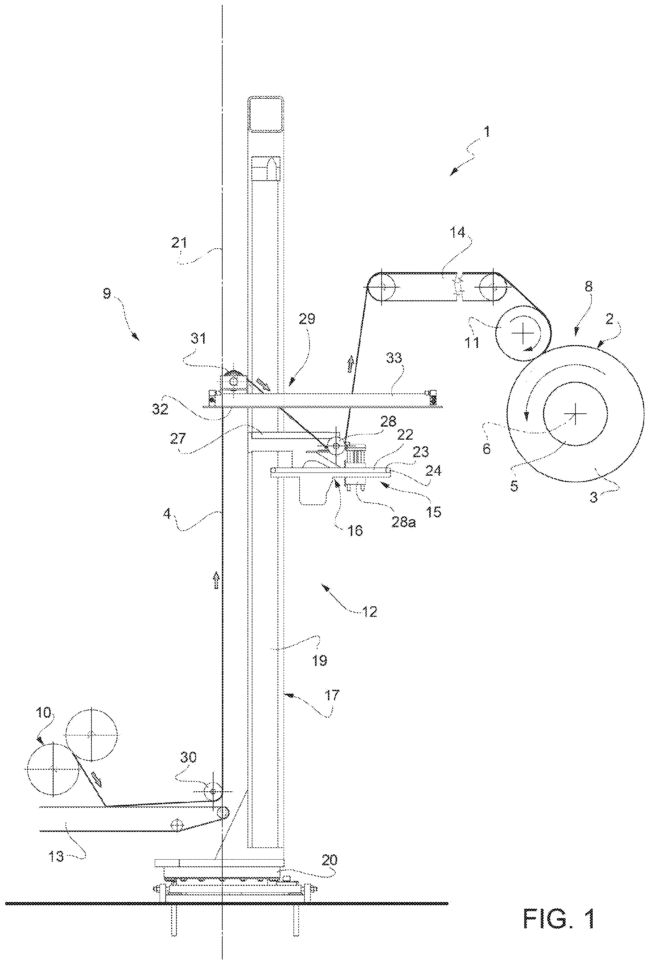

Figure 1 shows as a whole a system 1 for rubberizing an annular surface 2 of a toroidal body 3 forming part of a tire (not shown).

The annular surface 2 is gradually rubberized by coating the annular surface 2 with a strip 4 of elastomeric material having a determined length and section.

To this end, the toroidal body is rotatably mounted onto a spindle to rotate about an axis 6 thereof, coaxial to the annular surface 2, under the thrust of a variable speed motor (not shown), and defines, with the spindle 5, a user unit 8 for the strip 4.

The strip 4 is fed to the annular surface 2 by means of a feeding unit 9 forming part of the system 1, and comprising a profiling calender 10, which is adapted to receive the elastomeric material from an extruder (not shown) typically in the form of a circular section rod to transform the rod into the strip 4, and an applicator roller 11 arranged tangentially to the toroidal body 3 to deposit the strip 4, during operation, onto the annular surface 2.

The feeding unit 9 further comprises a strip feeding line 12 arranged between the calender 10 and the applicator roller 11.

As shown in Figure 1, the feeding line 12 comprises an inlet conveyor 13, which is adapted to receive the strip 4 from the calender 10, an outlet conveyor 14, which is adapted to feed the strip 4 to the applicator roller 11, and a transfer unit 15, which is arranged between the inlet conveyor 13 and the outlet conveyor 14, and configured, as explained hereinafter, to transfer the head portion of the strip 4 from the inlet conveyor 13 to the outlet conveyor 14at the beginning of each process of rubberizing an annular surface 2, to dynamically control advancement of the strip 4 during the rubberizing process and to guide the tail portion of the strip 4 during the final step of the rubberizing process.

In particular, according to the preferred embodiment shown in the Figures, the inlet conveyor 13 is a motorized belt conveyor arranged at a lower level than the calender 10 so that, when the calender 10 is operative, the strip 4 falls onto the inlet conveyor 13 by gravity , without any intermediate transfer members being needed.

The outlet conveyor 14 comprises a motorized belt conveyor adapted to receive the strip 4 from the transfer unit 15 and feed it to the applicator roller 11 by means of a guide device (not shown). Preferably, the belt conveyor is of a telescopic type and it is mounted to swivel about an axis transversal to the axis 6 of the toroidal body 3 to follow the movements of the applicator roller 11 during the application of the strip 4 to the annular surface 2.

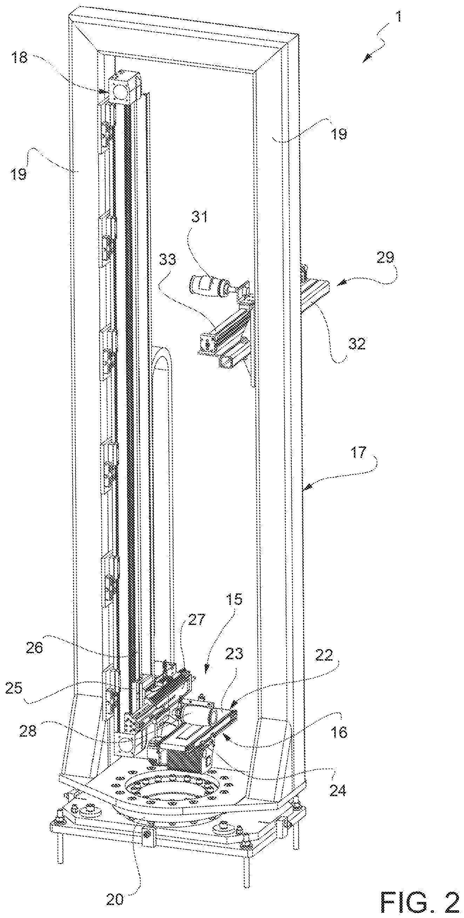

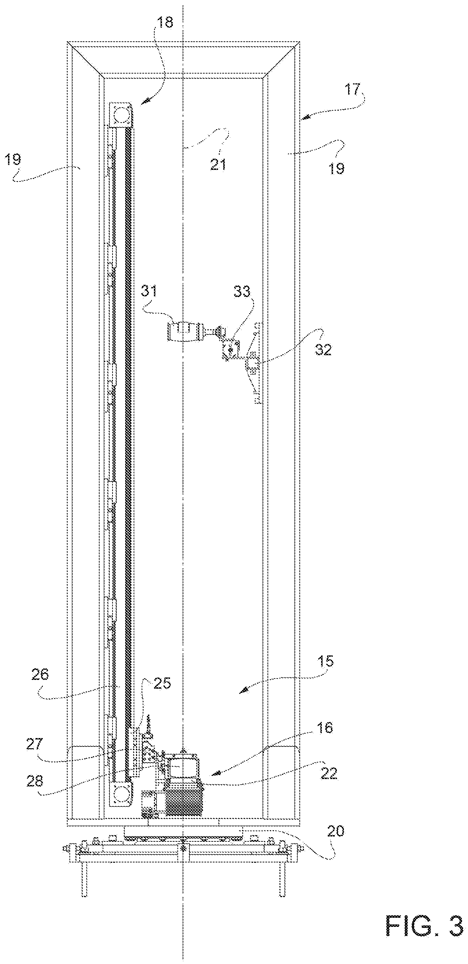

As shown in Figure 1 and, in greater detail, in Figures 2 and 3, the transfer unit 15 comprises a strip shuttle 16, which performs the function of "leading feeding" the strip 4 at the beginning of the rubberizing process, namely transferring the head portion of the strip 4 from the inlet conveyor 13 to the outlet conveyor 14.

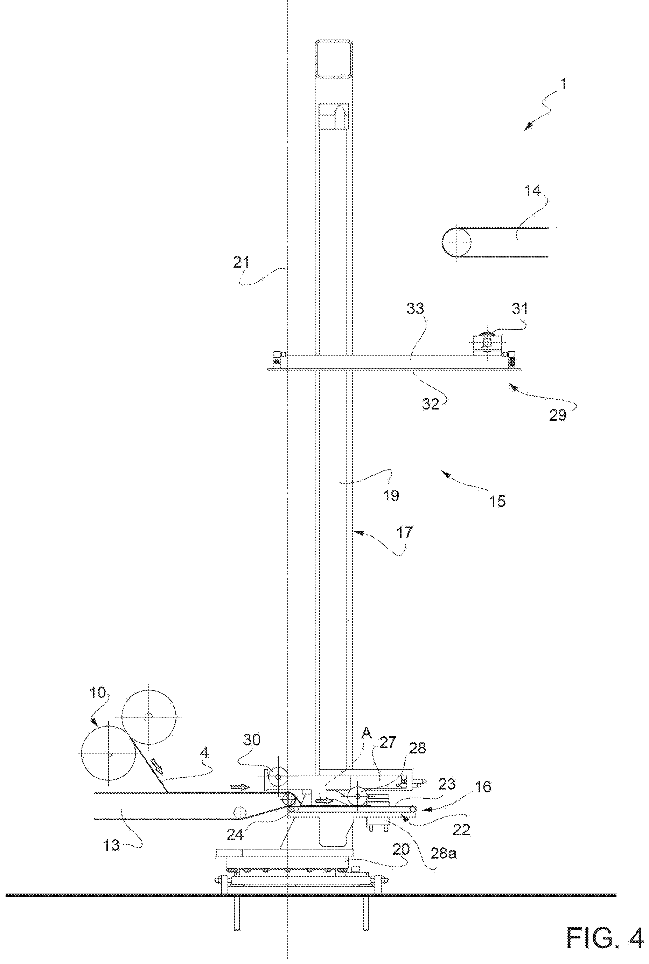

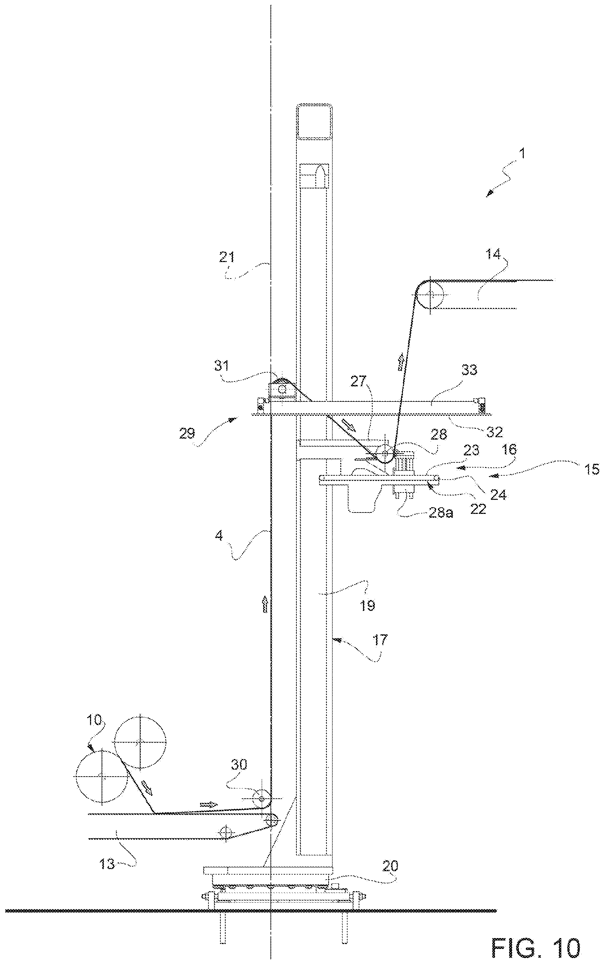

To this end, the strip shuttle 16 is mounted onto a frame 17 arranged between the inlet conveyor 13 and the outlet conveyor 14 and it is connected to a drive device 18, carried by the frame 17, to move between a receiving position (figure 4), wherein the shuttle 16 is arranged close to, and below, the inlet conveyor 13 so as to receive the head end of the strip 4 by gravity, and a release position (figure 10), wherein the shuttle 16 is arranged close to, and above the outlet conveyor 14 so as to feed the head portion of the strip 4 by gravity onto the outlet conveyor 14.

In the preferred embodiment shown in the Figures, the inlet conveyor 13 and the outlet conveyor 14 are on different levels and, in particular, the outlet conveyor 14 is arranged at a higher level with respect to the inlet conveyor 13.

According to a different embodiment, not shown, the inlet and outlet conveyors are at substantially the same level, or, according to another embodiment, also not shown, their positions are swapped compared to those shown in the Figures.

As shown in Figure 2, the frame 17 has a gantry structure with two vertical uprights 19, an upper crossbar and a base, which is connected to a fixed support by means of a slewing ring 20 so as to allow the frame 17 to rotate, under the thrust of a motor (not shown) about a vertical axis 21 to perform angular movements of determined widths in both directions of rotation, starting from a neutral position (Figure 1), so as to accompany the angular movements of the applicator roller 11 during the depositing of the strip 4 onto the annular surface 2 to be rubberized.

Preferably, the frame 17 is rigidly connected to the outlet conveyor 14, which is thus rotatable, with the frame 17, about the axis 21.

Preferably, as shown in Figure 1, the uprights 19 rise from the base in an eccentric position with respect to the slewing ring 20, so that the vertical plane passing through the uprights 19 does not contain the axis 21 and lies between the axis 21 and the outlet conveyor 14.

With reference to Figure 2, the strip shuttle 16 is slidably mounted along one of the two uprights 19, and comprises a motorized auxiliary conveyor 22, which projects from the upright 19 supporting the auxiliary conveyor 22 towards the other upright 19.

Preferably, the auxiliary conveyor 22 is a motorized belt conveyor comprising a belt 23 looped about two rollers 24 to define, on the belt 23, an upper operative section adapted to be engaged, when the strip shuttle 16 is in the receiving position, by the head portion of the strip 4 coming out of the calender 10, and advance the head portion of the strip 4 in an advancement direction (shown in figure 4 by letter A) transversal to the axis 21 and to the plane passing through the uprights 19.

According to a variant, not shown, the auxiliary conveyor 22 comprises, in place of the belt 23, a plurality of rollers, at least one of which is motorized and which are rotatably mounted to rotate about respective axes parallel to the stated advancement direction A.

The strip shuttle 16 is mounted onto the relative upright 19 by means of a slide 25 slidably coupled to a linear guide 26 carried by the upright 19 to allow the shuttle 16 to slide, during operation, along the upright 19 under the thrust of the drive device 18, which comprises an electric motor (not shown), a speed reducer (not shown), and a mechanical transmission (not shown), such as, for example, a gearing or a belt drive or any other transmission adapted for the purpose.

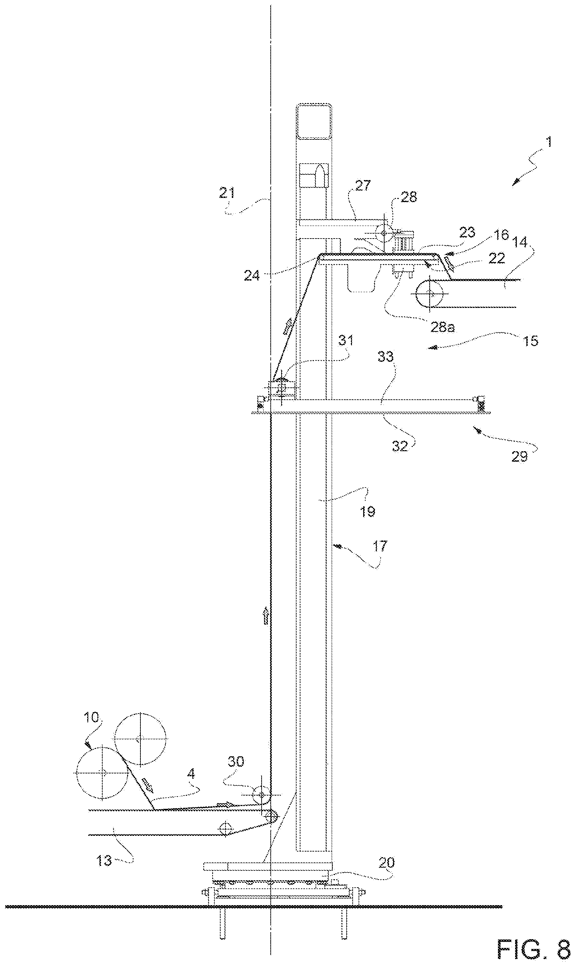

The auxiliary conveyor 22 is mounted on the slide 25 with the interposition of a linear actuator 27, with a fixed part connected rigidly to the chute 25 and a movable part connected rigidly to the auxiliary conveyor 22 to allow the auxiliary conveyor 22 to move, during operation, in the advancement direction A, between a first lateral position (shown, for example, in Figure 4), in which the auxiliary conveyor 22 is moved sideways towards the inlet conveyor 13, and a second lateral position (shown, for example, in Figure 8), in which the auxiliary conveyor 22 is moved sideways towards the outlet conveyor 14.

In particular, as shown in Figures 4 and 8, the inlet conveyor 13 and the auxiliary conveyor 22 are mutually arranged so that, in the first lateral position, the outlet end of the inlet conveyor 13 is at least partly overlapping the inlet end of the auxiliary conveyor 22.

Furthermore, in the first lateral position the inlet end of the auxiliary conveyor 22 is preferably tangential to the axis 21.

Similarly, the outlet conveyor 14 and the auxiliary conveyor 22 are mutually arranged so that, in the second lateral position, the outlet end of the auxiliary conveyor 22 is at least partly overlapping the inlet end of the outlet conveyor 14.

In addition to the auxiliary conveyor 22, the strip shuttle 16 comprises a pressure roller 28 arranged above an intermediate portion of the upper operative section of the belt 23 and idly mounted onto a pin extending perpendicular to the advancement direction A and parallel to the operative section of the belt 23. The pressure roller 28 is carried by the strip shuttle 16 and coupled to a respective linear actuator 29 adapted to move the pressure roller 28 between a lowered position, wherein it is substantially in contact with the upper section of the auxiliary conveyor 22, and a raised position, wherein it is spaced apart, and arranged above, the upper section of the auxiliary conveyor 22.

According to a different embodiment, not shown, the pressure roller 28 is replaced by a series of rollers intended to grip, center and guide the strip 4.

In addition to the strip shuttle 16, the transfer unit 15 comprises a guiding and tensioning assembly 29 intended, as described in detail later on, to guide the strip 4 along the feeding line 12 and form a strip accumulation area along the feeding line 12, so as to compensate for dynamic variations in length of the feeding line 12, caused, for example, by the dynamic variation in length of the telescopic outlet conveyor 14, and for speed variations in the delivery of the strip 4 by the extruder (not shown) and the calender 10 and in the application of the strip 4 by the applicator roller 11.

The guiding and tensioning assembly 29 comprises two tension rollers 30 and 31, which are arranged at respective fixed heights and mounted idly about respective rotation pins transversal to the axis 21 and parallel to the advancing direction A.

In particular, the tension roller 30 is arranged above the inlet conveyor 13, and the tension roller 31 is mounted onto a supporting crossbar 32 fixed, between the inlet conveyor 13 and the outlet conveyor 14, to the upright 19 which does not carry the strip shuttle 16.

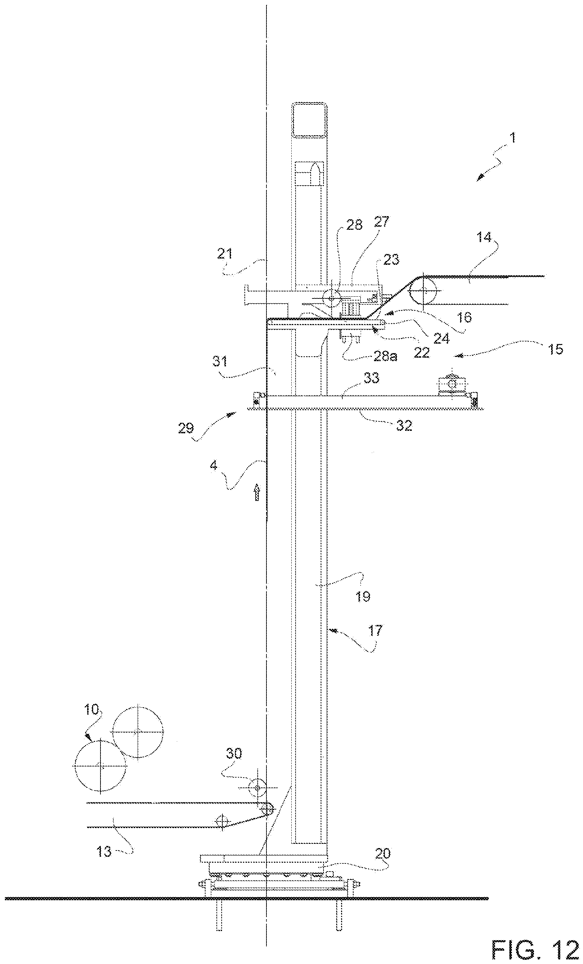

As shown in Figures 2 and 3, the tension roller 31 is cantilever mounted on the crossbar 32 towards the other upright 19, and it is movable along the crossbar 32 under the thrust of a linear actuator 33 between a non-operational position (Figures from 4 to 7 and Figure 12), in which the tension roller 31 fails to intersect the path of the strip 4, and an operational position (Figures from 8 to 11), in which the tension roller 31 is arranged between the tension roller 30 and the pressure roller 28 of the strip shuttle 16, so as to engage the strip 4.

Preferably, the tension roller 30 and the tension roller 31 are arranged on opposite sides of the axis 21, and in the operational position of the tension roller 31 both the tension roller 30 and the tension roller 31 are arranged tangentially to the axis 21.

Finally, the guiding and tensioning assembly 29 comprises a further tension roller adapted to cooperate with the tension roller 31 to form the strip accumulation area, namely to form, along the strip 4 path and, in particular, between the tension roller 31 and the outlet conveyor 14, a bend having a length dynamically variable in response to the variations in length of the outlet conveyor 14 and in the delivery speed of the extruder and/or in the depositing of the strip 4 on the annular surface 2.

The function of this further tension roller is carried out by the pressure roller 28 of the strip shuttle 16 when the strip shuttle 16 is in a variable tensioning position, which is shown in Figures 1 and 10 and will be described in detail later on.

The operation of the system 1 will be described with reference to Figures 4 to 12, which show the operating sequence of the feeding process of a strip 4, having determined length, to the toroidal body 3.

Such feeding process can be functionally divided into three main steps: an initial step of feeding of the head portion of the strip 4, known as leading feeding; an intermediate steady strip feeding step; and a final step of feeding of the tail portion of the strip 4.

### INITIAL STEP: FEEDING OF THE HEAD END OF THE STRIP - AUTOMATIC LEADING FEEDING - (FIGURES 4-9)

At the beginning of the automatic leading feeding step, the strip shuttle 16 is arranged in the receiving position and in the first lateral position; the inlet conveyor 13 and the auxiliary conveyor 22 are in motion.

Operation of the calender causes a strip 4 to be delivered, the head portion of which falls onto the inlet conveyor 13 and is pushed by the latter on the auxiliary conveyor 22, whose pressure roller 28 is arranged in a raised position. The strip head portion advances along the auxiliary conveyor 22 in the advancing direction A, passing below the pressure roller 28 until a sensor (not shown) positioned downstream of the pressure roller 28 detects the presence of the strip 4.

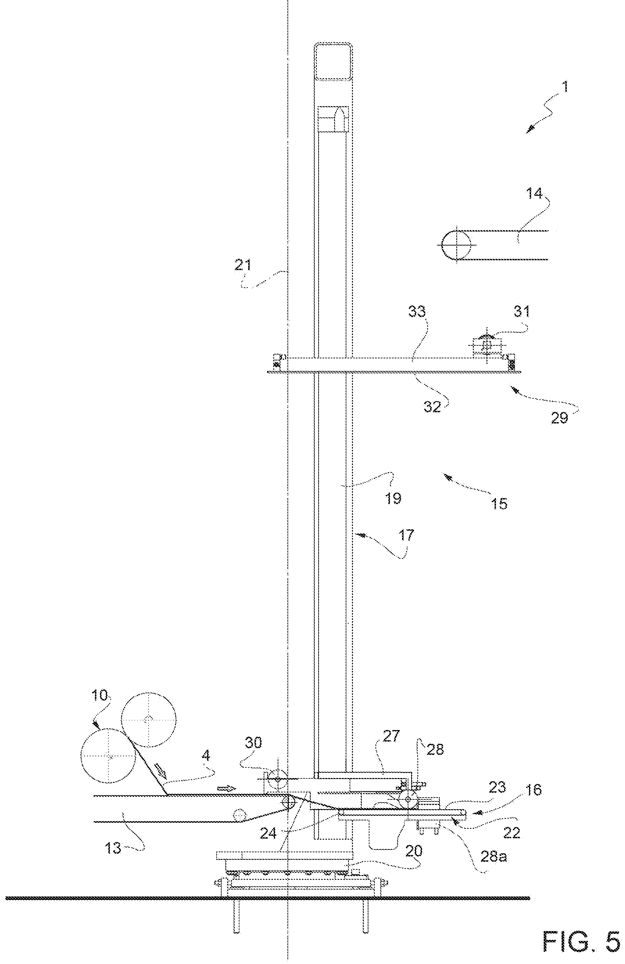

At this point, the pressure roller 28 is lowered (Figure 4) so as to firmly hold the head portion of the strip 4 on the auxiliary conveyor 22 while the latter is moved into the second lateral position (figure 5) so as to space itself apart from the inlet conveyor 13 and be able to translate freely in a vertical direction.

In relation to the above, it is worth pointing out that, in view of the adhesiveness of the elastomeric material (green rubber) forming the strip 4, the friction between the strip 4 and the surface of the inlet conveyor 13 might be sufficient to keep the strip 4 in position on the inlet conveyor 13 during the leading feeding step, also without the retaining action exerted by the pressure roller 28.

Furthermore, if the elastomeric material forming the strip 4 is particularly adhesive, the pressure roller 28 can be provided with mechanical detaching systems or compressed air or symbiotic systems serving the function of assisting the detachment of the strip 4 from the pressure roller 28 when required by the strip feeding process.

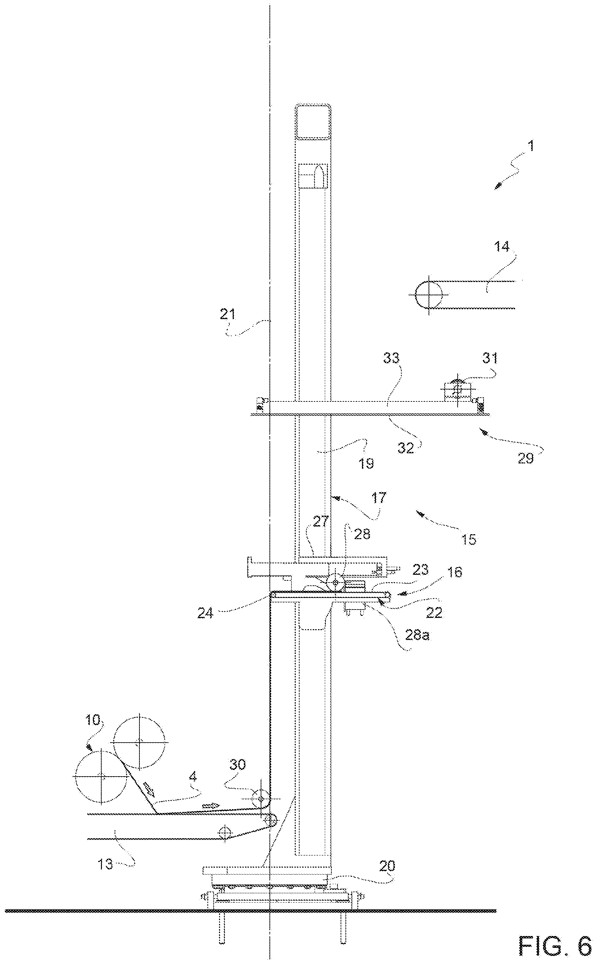

As shown in Figure 6, the strip shuttle 16 moves upwards, with the head portion of the strip 4, up to a predetermined height, at which the auxiliary conveyor 22 is moved again into the first lateral position so as not to interfere physically with the outlet conveyor 14 during the following raising step..

During raising of the strip shuttle 16, the belt 23 of the auxiliary conveyor 22 is held still, while the calender 10 and the inlet conveyor 13 are kept moving. As the strip shuttle 16 rises, the strip 4 loses contact with the inlet conveyor 13 and adheres to the tension roller 30, which holds the strip 4 in position.

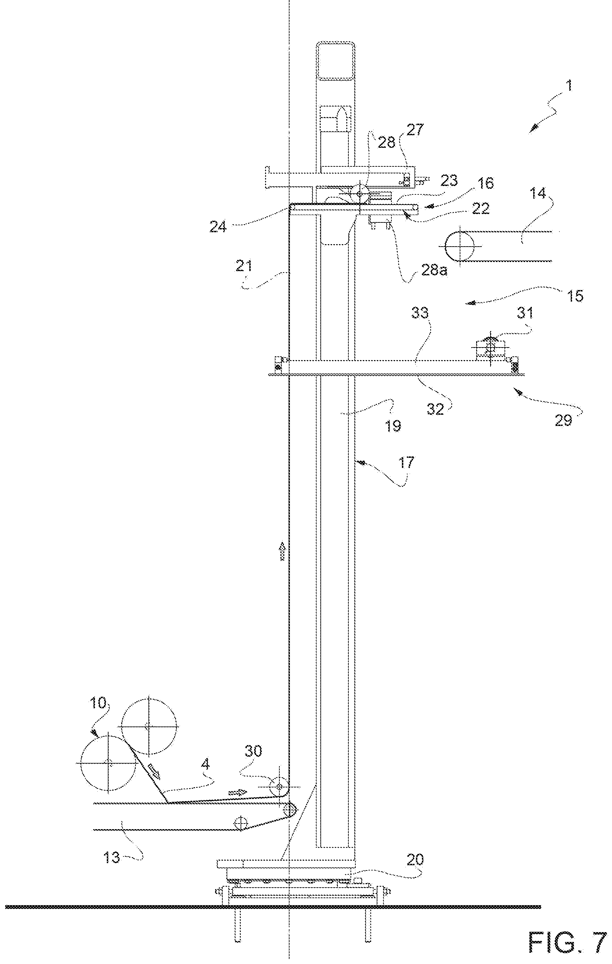

The raising of the strip shuttle 16 ends when the latter reaches a height greater than that of the outlet conveyor 14 (figure 7).

At this point, as shown in Figure 8, the auxiliary conveyor 22 is moved into the second lateral position and reaches the release position, wherein it is partially above the outlet conveyor 14. The pressure roller 28 is raised (unless it was already raised for the reasons stated above) and the belt 23 is operated with the consequent falling of the strip 4 directly onto the outlet conveyor 14, which advances the strip 4 to the applicator roller 11.

While the auxiliary conveyor 22 is releasing the strip 4 onto the outlet conveyor 14, the tension roller 31 is brought into its operational position tangential to the axis 21 to cooperate with the tension roller 30 such that the path of the strip 4 extends substantially along the axis 21 in the path section between the tension roller 30 and the tension roller 31.

The fact that the strip 4 extends along the axis 21 has the advantage to allow the frame 17 to be rotated about the axis 21 in both directions of rotation, starting from a central neutral position, accompanying the movements of the applicator roller 11, without compromising the physical characteristics of the strip 4. In fact, during rotation of the frame 17 and, consequently, of the tension roller 31, the strip 4 undergoes a partial winding on itself, in a longitudinal direction, between the two tension rollers 30 and 31. In this way, the tensions caused by the rotation are not concentrated, but distributed along the strip 4 with the consequent elimination of the risk of altering the shape and/or size of the strip 4.

After delivering the strip 4 on the outlet conveyor 14, the auxiliary conveyor 22 is moved into the first lateral position so as to move transversely away from the outlet conveyor 14. To allow the strip 4 to maintain its position with respect to the auxiliary conveyor 22 during the transversal movement the auxiliary conveyor 22, the belt 23 is operated at a speed equal to the sum of the speed at which the auxiliary conveyor 22 moves away from the outlet conveyor 14 and the linear speed imposed by the calender 10, the inlet conveyor 13 and the outlet conveyor 14. Alternatively, the calender 10, the inlet conveyor 13 and the outlet conveyor 14 are temporarily stopped and the belt 23 operated at a speed equal to that at which the auxiliary conveyor 22 moves away from the outlet conveyor 14.

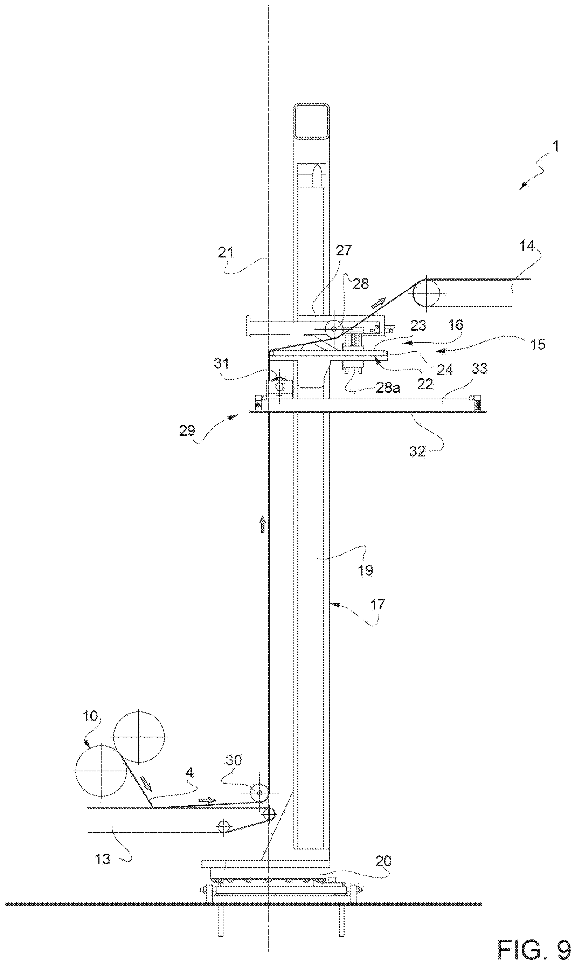

As shown in Figure 9, at this point the strip shuttle 16 is moved downwards to a determined height between the outlet conveyor 14 and the crossbar 32, and it is moved again into the second lateral position so as not to interfere, during the subsequent descent, with the tension roller 31.

### INTERMEDIATE STEP: STEADY FEEDING OF THE STRIP (FIGURE 10)

As shown in Figure 10, the strip shuttle 16 is lowered even further until it reaches the tensioning position, in which the strip 4 adheres to the tension rollers 30 and 31 and to the pressure roller 28, and the latter creates a bend, namely a strip accumulation area, along the path of the strip 4, between the tension roller 31 and the outlet conveyor 14.

The tensioning position is variable in the sense that the position of the strip shuttle 16 along the upright 19 is controlled by an electronic control unit of the system 1 so as to dynamically and controllably compensate for the variations in speed of the feeding line 12, in the delivery speed of the calender 10, and in the application speed of the applicator roller 11. The electronic control unit is configured to control the strip shuttle 16 based on tensile strength or force applied to the strip 4 and measured by a sensor or a load cell.

Therefore, the strip shuttle 16 acts as a dancer, which is actively controlled to be repositioned along the axis in response to any length variations of the strip 4 which may occur during the application step, so as to keep the tension and speed of the strip 4 substantially constant along the feeding line 12.

Preferably, a load cell adapted to measure the tension of the strip 4 is associated with the tension roller 31.

In general, the measurement of the tension of the strip 4 by means of a load cell is particularly important if the strip 4 consists of rubber or relatively soft mixtures because in this case an elongation of the elastomer can affect the delivered weight quantity (below expectations). In other cases (colder mixtures or larger strip section) the tension measurement can be ignored.

Another important function of the tension measurement is to detect whether the feeding line 12 is jammed causing the strip 4 to stretch; in this case, the feedback from the sensor causes the feeding line 12 to be stopped and an alarm to be provided, to allow the strip 4 to be subsequently repositioned.

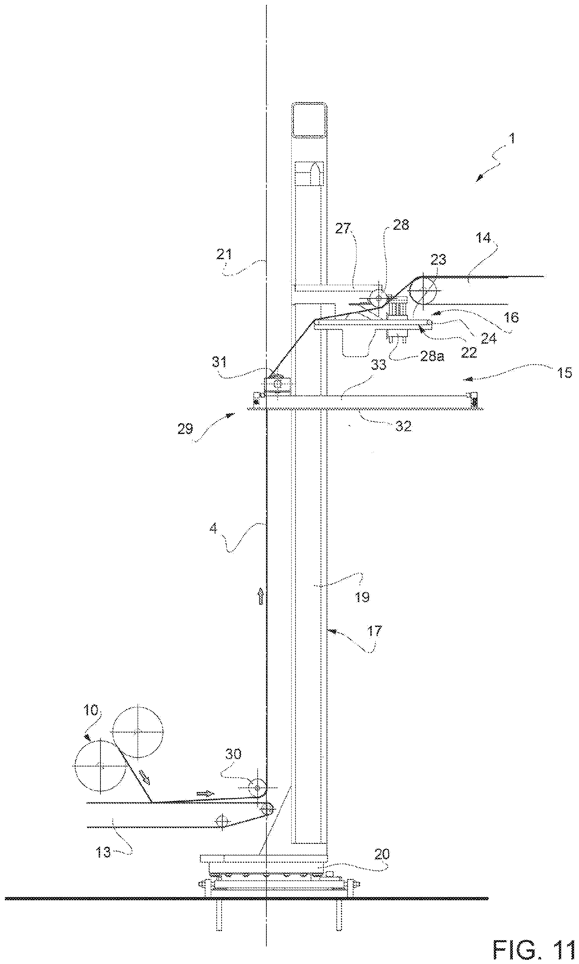

### FINAL STEP: FEEDING OF THE TAIL PORTION OF THE STRIP (FIGURES 11 and 12)

During the feeding process of the strip 4 along the feeding line 12, the strip 4 is cut at a determined length upstream of the calender10.

Figures 11 and 12 show how the feeding line 12 guides the tail portion of the strip 4 so as to accompany it to the outlet conveyor 14 preventing the strip 4 to loose or twist and thus allowing the whole length of the strip 4 to be used without scraps of material and without interrupting the application process.

As shown in Figure 11, once the strip 4 has been cut, the strip shuttle 16 is translated upwards until an intermediate position between the crossbar 32 and the outlet conveyor 14. The material surplus resulting from the reduction of the strip accumulation area is compensated by keeping the outlet conveyor 14 and the inlet conveyor 13 in motion and slowing down or stopping the calender 10.

As shown in figure 12, at this point the tension roller 31 is moved into the non-operational position, while the auxiliary conveyor 22 is moved into the first lateral position, in which the end of the belt is tangential to the axis 21.

This configuration allows the tail portion of the strip 4 to be guided upwards in a more controlled manner, reducing the oscillating movements thereof.

In fact, in this way, the upwards path of the tail portion of the strip 4 mainly consists of a first section, along which the tail portion of the strip 4 proceeds along the axis 21 and is held tight and not deformed by its own weight, and a second section, along which the strip 4 is in contact with the belt 23 of the auxiliary conveyor 22 and is guided by the auxiliary conveyor 22 to a point very close to the entrance of the outlet conveyor 14.

## Claims

1. A method for automatically feeding a strip (4) of elastomeric material to a user unit (8); the method comprises the steps of forming a strip (4) by means of a calender (10), and feeding the strip (4) to a strip applicator device (11) through a feeding line (12) comprising at least one inlet conveyor (13) adapted to receive the strip (4) from the calender (10), and an outlet conveyor (14) adapted to feed the strip (4) to the strip applicator device (11); the method is **characterized by** further comprising the step of transferring a head portion of the strip (4) from the inlet conveyor (13) to the outlet conveyor (14) by means of a strip shuttle (16), which is moved from a receiving position, in which the strip shuttle (16) is arranged close to the inlet conveyor (13) to receive the head portion of the strip (4) from the inlet conveyor (13), to a release position, in which the strip shuttle (16) is arranged close to the outlet conveyor (14) to release a head portion of the strip (4) onto the outlet conveyor (14); **and in that,** once the head portion of the strip (4) has been released onto the outlet conveyor (14), the strip shuttle (16) is moved into a tensioning position, in which the strip shuttle (16) engages the strip (4) so as to form a bend along the path of the strip (4).

2. The method according to claim 1, wherein the strip shuttle (16) is arranged below the inlet conveyor (13) in the receiving position, and above the outlet conveyor (14) in the release position.

3. The method according to claim 2, wherein the strip shuttle (16) comprises an auxiliary conveyor (22), which is moved relative to the strip shuttle (16) towards the inlet conveyor (13) when the strip shuttle (16) is arranged below the inlet conveyor (13), so as to receive the head portion of the strip (4) directly from the inlet conveyor (13), and towards the outlet conveyor (14) when the strip shuttle (16) is arranged above the outlet conveyor (14) to release the head portion of the strip (4) directly onto the outlet conveyor (14).

4. The method according to any one of the preceding claims, further comprising the step of adjusting a position of the strip shuttle (16), when it is arranged in the tensioning position, to compensate for variations in speed and/or tension of the strip (4) along the feeding line (12).

5. The method according to any one of the preceding claims, wherein the strip shuttle (16) is moved by sliding the strip shuttle (16) along a linear guide (26), which is interposed between the inlet conveyor (13) and the outlet conveyor (14), and is mounted to rotate about a substantially vertical rotation axis (21).

6. The method according to claim 5, wherein, once the head portion of the strip (4) has been fed to the outlet conveyor (14), the strip (4) is moved along the feeding line (12) through a guiding and tensioning assembly (29), which arranges the strip (4) along a advancement path comprising a linear portion which extends between the inlet conveyor (13) and said bend and lies on the rotation axis (21).

7. The method according to claim 3, further comprising a guiding step of an tail portion of the strip (4); the guiding step comprises distancing the strip shuttle (16) from the tensioning position so as to eliminate the bend along the path and allow the strip (4) to advance on the auxiliary conveyor (22).

8. A system for automatically feeding a strip (4) of elastomeric material to a user unit (8); the system comprises a calender (10) to form a strip (4), an applicator device (11) to apply the strip (4) to the user unit (8), and a strip feeding line (12) arranged between the calender (10) and the applicator device (11) and comprising at least one inlet conveyor (13) adapted to receive the strip (4) from the calender (10) and an outlet conveyor (14) adapted to feed the strip (4) to the applicator device (11); the system is **characterized in that** the strip feeding line (12) further comprises a strip shuttle (16) for transferring a head portion of the strip (4) from the inlet conveyor (13) to the outlet conveyor (14); the strip shuttle (16) is mounted to move between a receiving position, in which the strip shuttle (16) is arranged close to the inlet conveyor (13) to receive from the inlet conveyor (13)the head portion of the strip (4), to a release position, in which the strip shuttle (16) is arranged close to the outlet conveyor (14) to release the head end of the strip (4) on to the outlet conveyor (14); and to assume, once the head portion of the strip (4) has been released onto the outlet conveyor (14), a tensioning position, in which the strip shuttle (16) engages the strip (4) so as to form a bend along the path of the strip (4).

9. The system according to claim 8, wherein the strip shuttle (16) is arranged below the inlet conveyor (13) in the receiving position, and above the outlet conveyor (14) in the release position.

10. The system according to claim 9, wherein the strip shuttle (16) comprises an auxiliary conveyor (22), which is movable with respect to the strip shuttle (16) to move towards the inlet conveyor (13) when the strip shuttle (16) is arranged below the inlet conveyor (13), to receive the head portion of the strip (4) directly from the inlet conveyor (13)and to move towards the outlet conveyor, (14) when the strip shuttle (16) is arranged above the outlet conveyor (14), to release the head portion of the strip (4) directly onto the outlet conveyor (14).

11. The system according to any one of the claims from 8 to 10, wherein the said tensioning position of the strip shuttle (16) is adjustable during the feeding process of the strip (4) to compensate for variations in speed and/or tension of the strip (4) along the feeding line (12).

12. The system according to any one of the preceding claims from 8 to 11, wherein the strip shuttle (16) is slidably mounted along a linear guide (26), which is arranged between the inlet conveyor (13) and the outlet conveyor (14) and is mounted to rotate about a substantially vertical rotation axis (21).

13. The system according to claim 12, wherein the feeding line (12) comprises a guiding and tensioning assembly (29), which is configured to arrange the strip (4), once the head portion of the strip (4) has been fed to the outlet conveyor (14), along an advancement path comprising a linear section arranged between the inlet conveyor (13) and said bend, and lies on the rotation axis (21).

14. The system according to claim 13, wherein the tensioning assembly comprises two first tension rollers (30, 31) arranged at fixed heights and defining the ends of said linear section, and a second tension roller (28) carried by the strip shuttle (16) and configured to define said bend along the path of the strip (4) when the strip shuttle (16) is in the tensioning position.

15. The system according to claim 10, wherein the strip shuttle (16) is mounted so as to be arranged in a guiding position for guiding the tail portion of the strip (4), in which position the bend is eliminated and the strip (4) advances along the auxiliary conveyor (22).

## Patentansprüche

1. Verfahren zum automatischen Zuführen eines Streifens (4) aus elastomerem Material zu einer Benutzereinheit (8); das Verfahren umfasst die Schritte des Bildens eines Streifens (4) mittels eines Kalanders (10) und des Zuführen des Streifens (4) zu einer Streifenaufbringvorrichtung (11) durch eine Zufuhrstraße (12) umfassend mindestens einen Einlassförderer (13), der ausgelegt ist, den Streifen (4) von dem Kalander (10) aufzunehmen, und einen Auslassförderer (14), der ausgelegt ist, den Streifen (4) der Streifenaufbringvorrichtung (11) zuzuführen; das Verfahren ist **dadurch gekennzeichnet, dass** es überdies den Schritt des Übertragens eines Anfangsabschnitts des Streifens (4) von dem Einlassförderer (13) zu dem Auslassförderer (14) mittels eines Streifen-Pendelfahrzeugs (16) umfasst, das von einer Aufnahmeposition, in der das Streifen-Pendelfahrzeug (16) nahe dem Einlassförderer (13) angeordnet ist, um den Anfangsabschnitt des Streifens (4) von dem Einlassförderer (13) aufzunehmen, zu einer Abgabeposition bewegt wird, in der das Streifen-Pendelfahrzeug (16) nahe dem Auslassförderer (14) angeordnet ist, um einen Anfangsabschnitt des Streifens (4) auf den Auslassförderer (14) abzugeben; **und dadurch, dass,** sobald der Anfangsabschnitt des Streifens (4) auf den Auslassförderer (14) abgegeben wurde, das Streifen-Pendelfahrzeug (16) in eine Spannungsposition bewegt wird, in der das Streifen-Pendelfahrzeug (16) so in den Streifen (4) eingreift, dass eine Biegung im Pfad des Streifens (4) gebildet wird.

2. Verfahren nach Anspruch 1, wobei das Streifen-Pendelfahrzeug (16) in der Aufnahmeposition unterhalb des Einlassförderers (13) und in der Abgabeposition oberhalb des Auslassförderers (14) angeordnet ist.

3. Verfahren nach Anspruch 2, wobei das Streifen-Pendelfahrzeug (16) einen zusätzlichen Förderer (22) umfasst, der relativ zu dem Streifen-Pendelfahrzeug (16) zu dem Einlassförderer (13) bewegt wird, wenn das Streifen-Pendelfahrzeug (16) unterhalb des Einlassförderers (13) angeordnet ist, um so den Anfangsabschnitt des Streifens (4) direkt von dem Einlassförderer (13) aufzunehmen, und zu dem Auslassförderer (14) bewegt wird, wenn das Streifen-Pendelfahrzeug (16) oberhalb des Auslassförderers (14) angeordnet ist, um den Anfangsabschnitt des Streifens (4) direkt auf den Auslassförderer (14) abzugeben.

4. Verfahren nach einem beliebigen der vorhergehenden Ansprüche, überdies umfassend den Schritt des Anpassens einer Position des Streifen-Pendelfahrzeugs (16), wenn es in der Spannungsposition angeordnet ist, um Schwankungen bei der Geschwindigkeit und/oder Spannung des Streifens (4) entlang der Zufuhrstraße (12) auszugleichen.

5. Verfahren nach einem beliebigen der vorhergehenden Ansprüche, wobei das Streifen-Pendelfahrzeug (16) durch Gleiten des Streifen-Pendelfahrzeugs (16) entlang einer linearen Führung (26) bewegt wird, die zwischen dem Einlassförderer (13) und dem Auslassförderer (14) positioniert ist und montiert ist, sich um eine im Wesentlichen vertikale Drehachse (21) zu drehen.

6. Verfahren nach Anspruch 5, wobei, sobald der Anfangsabschnitt des Streifens (4) dem Auslassförderer (14) zugeführt wurde, der Streifen (4) entlang der Zufuhrstraße (12) durch eine Führungs- und Spannungsbaugruppe (29) bewegt wird, die den Streifen (4) entlang eines Vorwärtspfads anordnet, der einen linearen Abschnitt umfasst, der sich zwischen dem Einlassförderer (13) und der Biegung erstreckt und auf der Drehachse (21) liegt.

7. Verfahren nach Anspruch 3, überdies umfassend einen Führungsschritt eines Endabschnitts des Streifens (4); der Führungsschritt umfasst das Beabstanden des Streifen-Pendelfahrzeugs (16) von der Spannungsposition, um so die Biegung entlang des Pfads zu beseitigen und es dem Streifen (4) zu ermöglichen, sich auf dem zusätzlichen Förderer (22) vorwärts zu bewegen.

8. System zum automatischen Zuführen eines Streifens (4) aus elastomerem Material zu einer Benutzereinheit (8); das System umfasst eine Kalander (10) zum Bilden eines Streifens (4), eine Aufbringvorrichtung (11), um den Streifen (4) auf die Benutzereinheit (8) aufzubringen, und eine Streifenzufuhrstraße (12), die zwischen dem Kalander (10) und der Aufbringvorrichtung (11) angeordnet ist und mindestens einen Einlassförderer (13), der ausgelegt ist, den Streifen (4) von dem Kalander (10) aufzunehmen, und einen Auslassförderer (14) umfasst, der ausgelegt ist, den Streifen (4) der Aufbringvorrichtung (11) zuzuführen; das System ist **dadurch gekennzeichnet, dass** die Streifenzufuhrstraße (12) überdies ein Streifen-Pendelfahrzeug (16) zum Übertragen eines Anfangsabschnitts des Streifens (4) von dem Einlassförderer (13) zu dem Auslassförderer (14) umfasst; das Streifen-Pendelfahrzeug (16) ist montiert, um sich von einer Aufnahmeposition, in der das Streifen-Pendelfahrzeug (16) nahe dem Einlassförderer (13) angeordnet ist, um den Anfangsabschnitt des Streifens (4) von dem Einlassförderer (13) aufzunehmen, zu einer Abgabeposition zu bewegen, in der das Streifen-Pendelfahrzeug (16) nahe dem Auslassförderer (14) angeordnet ist, um den Anfangsabschnitt des Streifens (4) auf den Auslassförderer (14) abzugeben; und um, sobald der Anfangsabschnitt des Streifens (4) auf den Auslassförderer (14) abgegeben wurde, eine Spannungsposition einzunehmen, in der das Streifen-Pendelfahrzeug (16) so in den Streifen (4) eingreift, dass eine Biegung entlang des Pfads des Streifens (4) gebildet wird.

9. System nach Anspruch 8, wobei das Streifen-Pendelfahrzeug (16) in der Aufnahmeposition unterhalb des Einlassförderers (13) und in der Abgabeposition oberhalb des Auslassförderers (14) angeordnet ist.

10. System nach Anspruch 9, wobei das Streifen-Pendelfahrzeug (16) einen zusätzlichen Förderer (22) umfasst, der in Bezug auf das Streifen-Pendelfahrzeug (16) beweglich ist, um sich zu dem Einlassförderer (13) zu bewegen, wenn das Streifen-Pendelfahrzeug (16) unterhalb des Einlassförderers (13) angeordnet ist, um den Anfangsabschnitt des Streifens (4) direkt von dem Einlassförderer (13) aufzunehmen, und zu dem Auslassförderer (14) zu bewegen, wenn das Streifen-Pendelfahrzeug (16) oberhalb des Auslassförderers (14) angeordnet ist, um den Anfangsabschnitt des Streifens (4) direkt auf den Auslassförderer (14) abzugeben.

11. System nach einem beliebigen der Ansprüche 8 bis 10, wobei die Spannungsposition des Streifen-Pendelfahrzeugs (16) während des Zufuhrprozesses des Streifens (4) anpassbar ist, um Schwankungen bei der Geschwindigkeit und/oder Spannung des Streifens (4) entlang der Zufuhrstraße (12) auszugleichen.

12. System nach einem beliebigen der vorhergehenden Ansprüche 8 bis 11, wobei das Streifen-Pendelfahrzeug (16) entlang einer linearen Führung (26) gleitfähig montiert ist, die zwischen dem Einlassförderer (13) und dem Auslassförderer (14) angeordnet ist und montiert ist, sich um eine im Wesentlichen vertikale Drehachse (21) zu drehen.

13. System nach Anspruch 12, wobei die Zufuhrstraße (12) eine Führungs- und Spannungsbaugruppe (29) umfasst, die ausgestaltet ist, den Streifen (4), sobald der Anfangsabschnitt des Streifens (4) dem Auslassförderer (14) zugeführt wurde, entlang eines Vorwärtspfads anzuordnen, der einen linearen Abschnitt umfasst, der zwischen dem Einlassförderer (13) und der Biegung angeordnet ist und auf der Drehachse (21) liegt.

14. System nach Anspruch 13, wobei die Spannungsbaugruppe zwei erste Spannrollen (30, 31), die in festen Höhen angeordnet sind und die Enden des linearen Abschnitts bestimmen, und eine zweite Spannrolle (28) umfasst, die von dem Streifen-Pendelfahrzeug (16) getragen wird und ausgestaltet ist, die Biegung entlang des Pfads des Streifens (4) zu bestimmen, wenn das Streifen-Pendelfahrzeug (16) in der Spannungsposition ist.

15. System nach Anspruch 10, wobei das Streifen-Pendelfahrzeug (16) so montiert ist, dass es in einer Führungsposition zum Führen des Endabschnitts des Streifens (4) angeordnet ist, wobei die Biegung in dieser Position beseitigt ist und sich der Streifen (4) entlang des zusätzlichen Förderers (22) vorwärts bewegt.

## Revendications

1. Procédé pour l'alimentation automatique d'un ruban (4) de matériau élastomère à une unité d'utilisateur (8) ; le procédé comprend les étapes pour former un ruban (4) au moyen d'une calandre (10) et amener le ruban (4) à un dispositif applicateur de ruban (11) par le biais d'une ligne d'alimentation (12) comprenant au moins un transporteur d'entrée (13) adapté pour recevoir le ruban (4) de la calandre (10) et un transporteur de sortie (14) adapté pour amener le ruban (4) au dispositif applicateur de ruban (11) ; le procédé est **caractérisé en ce qu'**il comprend l'étape pour transférer une partie de tête du ruban (4) du transporteur d'entrée (13) au transporteur de sortie (14) au moyen d'une navette de ruban (16) qui est déplacée à partir d'une position de réception dans laquelle la navette de ruban (16) est agencée à proximité du transporteur d'entrée (13) pour recevoir la partie de tête du ruban (4) du transporteur d'entrée (13), à une position de libération dans laquelle la navette de ruban (16) est agencée à proximité du transporteur de sortie (14) pour libérer une partie de tête du ruban (4) sur le transporteur de sortie (14) ; et **en ce que**, une fois que la partie de tête du ruban (4) a été libérée sur le transporteur de sortie (14), la navette de ruban (16) est déplacée dans une position de tension, dans laquelle la navette de ruban (16) met en prise le ruban (4) afin de former un coude le long de la trajectoire du ruban (4).

2. Procédé selon la revendication 1, dans lequel la navette de ruban (16) est agencée au-dessous du transporteur d'entrée (13) dans la position de réception, et au-dessus du transporteur de sortie (14) dans la position de libération.

3. Procédé selon la revendication 2, dans lequel la navette de ruban (16) comprend un transporteur auxiliaire (22) qui est déplacé par rapport à la navette de ruban (16) vers le transporteur d'entrée (13) lorsque la navette de ruban (16) est agencée au-dessous du transporteur d'entrée (13), afin de recevoir la partie de tête du ruban (4) directement du transporteur d'entrée (13), et vers le transporteur de sortie (14) lorsque la navette de ruban (16) est agencée au-dessus du transporteur de sortie (14) pour libérer la partie de tête de la bande (4) directement sur le transporteur de sortie (14).

4. Procédé selon l'une quelconque des revendications précédentes, comprenant en outre l'étape pour ajuster une position de la navette de ruban (16) lorsqu'elle est agencée dans la position de tension, afin de compenser les variations de vitesse et/ou de tension du ruban (4) le long de la ligne d'alimentation (12) .

5. Procédé selon l'une quelconque des revendications précédentes, dans lequel la navette de ruban (16) est déplacée en faisant coulisser la navette de ruban (16) le long d'un guide linéaire (26) qui est intercalé entre le transporteur d'entrée (13) et le transporteur de sortie (14) et qui est monté pour tourner autour d'un axe de rotation (21) sensiblement vertical.

6. Procédé selon la revendication 5, dans lequel, une fois que la partie de tête du ruban (4) a été amenée au transporteur de sortie (14), le ruban (4) est déplacé le long de la ligne d'alimentation (12) par le biais d'un ensemble de guidage et de tension (29), qui agence le ruban (4) le long d'une trajectoire d'avancement comprenant une partie linéaire qui s'étend entre le transporteur d'entrée (13) et ledit coude et qui repose sur l'axe de rotation (21).

7. Procédé selon la revendication 3, comprenant en outre une étape de guidage d'une partie de queue du ruban (4) ; l'étape de guidage comprend l'étape pour éloigner la navette de ruban (16) de la position de tension afin de supprimer le coude le long de la trajectoire et permettre au ruban (4) d'avancer sur le transporteur auxiliaire (22).

8. Système pour l'alimentation automatique d'un ruban (4) de matériau élastomère à une unité d'utilisateur (8) ; le système comprend une calandre (10) pour former un ruban (4), un dispositif applicateur (11) pour appliquer le ruban (4) sur l'unité d'utilisateur (8), et une ligne d'alimentation de ruban (12) agencée entre la calandre (10) et le dispositif applicateur (11) et comprenant au moins un transporteur d'entrée (13) adapté pour recevoir le ruban (4) de la calandre (10) et un transporteur de sortie (14) adapté pour amener le ruban (4) au dispositif applicateur (11) ; le système est **caractérisé en ce que** la ligne d'alimentation de ruban (12) comprend en outre une navette de ruban (16) pour transférer une partie de tête du ruban (4) du transporteur d'entrée (13) au transporteur de sortie (14) ; la navette de ruban (16) est montée pour se déplacer entre une position de réception dans laquelle la navette de ruban (16) est agencée à proximité du transporteur d'entrée (13) afin de recevoir, du transporteur d'entrée (13), la partie de tête du ruban (4), à une position de libération dans laquelle la navette de ruban (16) est agencée à proximité du transporteur de sortie (14) pour libérer l'extrémité de tête du ruban (4) sur le transporteur de sortie (14) ; et pour adopter, une fois que la partie de tête du ruban (4) a été libérée sur le transporteur de sortie (14), une position de tension, dans laquelle la navette de ruban (16) met en prise le ruban (4) afin de former un coude le long de la trajectoire du ruban (4).

9. Système selon la revendication 8, dans lequel la navette de ruban (16) est agencée au-dessous du transporteur d'entrée (13) dans la position de réception et au-dessus du transporteur de sortie (14) dans la position de libération.

10. Système selon la revendication 9, dans lequel la navette de ruban (16) comprend un transporteur auxiliaire (22) qui est mobile par rapport à la navette de ruban (16) pour se déplacer vers le transporteur d'entrée (13) lorsque la navette de ruban (16) est agencée au-dessous du transporteur d'entrée (13), pour recevoir la partie de tête du ruban (4) directement depuis le transporteur d'entrée (13) et pour se déplacer vers le transporteur de sortie (14) lorsque la navette de ruban (16) est agencée au-dessus du transporteur de sortie (14), afin de libérer la partie de tête du ruban (4) directement sur le transporteur de sortie (14).

11. Système selon l'une quelconque des revendications 8 à 10, dans lequel ladite position de tension de la navette de ruban (16) est ajustable pendant le procédé d'alimentation du ruban (4) pour compenser les variations de vitesse et/ou de tension du ruban (4) le long de la ligne d'alimentation (12).

12. Système selon l'une quelconque des revendications 8 à 11, dans lequel la navette de ruban (16) est montée de manière coulissante le long d'un guide linéaire (26) qui est agencé entre le transporteur d'entrée (13) et le transporteur de sortie (14) et est monté pour tourner autour d'un axe de rotation (21) sensiblement vertical.

13. Système selon la revendication 12, dans lequel la ligne d'alimentation (12) comprend un ensemble de guidage et de tension (29) qui est configuré pour agencer le ruban (4), une fois que la partie de tête du ruban (4) a été amenée au transporteur de sortie (14), le long d'une trajectoire d'avancement comprenant une section linéaire agencée entre le transporteur d'entrée (13) et ledit coude, et qui repose sur l'axe de rotation (21).

14. Système selon la revendication 13, dans lequel l'ensemble de tension comprend deux premiers rouleaux de tension (30, 31) agencés à des hauteurs fixes et définissant les extrémités de ladite section linéaire, et un second rouleau de tension (28) porté par la navette de ruban (16) et configuré pour définir ledit coude le long de la trajectoire du ruban (4) lorsque la navette de ruban (16) est dans la position de tension.

15. Système selon la revendication 10, dans lequel la navette de ruban (16) est montée afin d'être agencée dans une position de guidage pour guider la partie de queue du ruban (4), position dans laquelle le coude est supprimé et le ruban (4) avance le long du transporteur auxiliaire (22).
